# EUROPÄISCHE PATENTSCHRIFT

(11) **EP 0 697 099 B1**
(45) Veröffentlichungstag und Bekanntmachung des Hinweises auf die Patenterteilung: **03.05.2000**
(21) Anmeldenummer: 95908196.9
(22) Anmeldetag: 15.02.1995
(51) Int. Cl.: G01F 1/684

(54) **VORRICHTUNG ZUR MESSUNG DER MASSE EINES STRÖMENDEN MEDIUMS**
DEVICE FOR MEASURING THE MASS OF A FLOWING MEDIUM
DISPOSITIF DE MESURE DE LA MASSE D'UN MILIEU EN ECOULEMENT

(30) Priorität: 04.03.1994 DE 4407209
(43) Veröffentlichungstag der Anmeldung: 21.02.1996
(73) Patentinhaber: ROBERT BOSCH GMBH, 70442 Stuttgart (DE)
(72) Erfinder: REYMANN, Klaus, D-70839 Gerlingen (DE); TANK, Dieter, D-71735 Eberdingen (DE); KONZELMANN, Uwe, D-71679 Asperg (DE); MARBERG, Henning, D-71263 Weil der Stadt (DE)
(74) Vertreter: Knetsch, Manfred
(86) Internationale Anmeldenummer: DE9500184
(87) Internationale Veröffentlichungsnummer: WO9523955

(56) Entgegenhaltungen:
- EP-A- 0 173 946
- EP-A- 0 313 089
- DE-A- 3 200 507
- PATENT ABSTRACTS OF JAPAN vol. 17, no. 220 (P-1529) 30. April 1993 & JP,A,04 355 329 (HITACHI) 9. Dezember 1992

## Beschreibung

### Stand der Technik

Die Erfindung geht aus von einer Vorrichtung zur Messung der Masse eines strömenden Mediums nach der Gattung des Patentanspruchs 1. Es ist schon eine Vorrichtung (EP-A-0 547 595) bekannt, die ein rohrförmiges Innengehäuse und ein rohrförmiges Außengehäuse besitzt, bei der ein temperaturempfindliches Meßelement in einem zentralen, sich in axialer Richtung im Innengehäuse erstreckenden, einseitig offenen Meßkanal des Innengehäuses untergebracht ist, um die Masse eines strömenden Mediums, insbesondere die Ansaugluftmasse einer Brennkraftmaschine zu bestimmen. Die Vorrichtung ist als montierbares Zwischenstück, zum Beispiel einer Ansaugleitung vorgesehen, durch die hindurch die Brennkraftmaschine über einen Luftfilter, Luft aus der Umgebung ansaugen kann. Das mit Hilfe mehrerer Rippen mit dem Außengehäuse verbundene, rohrförmige Innengehäuse besitzt weiterhin einen aus dem Innengehäuse ausgenommenen, konzentrisch dem Meßkanal angeordneten Bypasskanal, der ringspaltförmig den Meßkanal mit geringerer axialer Erstreckung umschließt. Ein Teilstrom des im Außengehäuse strömenden Mediums strömt von einer zum Außengehäuse koaxial liegenden Einlaßmündung zunächst in den Meßkanal ein und umströmt das im Bereich seines stromabwärtigen Endes angeordnete, temperaturempfindliche Meßelement, wonach das strömende Medium vom Meßkanal unter Umkehrung seiner Strömungsrichtung in den Bypasskanal einströmt. Das im Bypasskanal stromaufwärts strömende Medium verläßt diesen durch eine am Umfang des Innengehäuses relativ weit stromabwärts der Einlaßmündung ausgenommene, schlitzförmige Auslaßöffnung und vermischt sich wieder mit dem zwischen dem Innengehäuse und dem Außengehäuses vorbeiströmenden Medium. Die Ausbildung der Vorrichtung als montierbares Zwischenstück mit einem Innengehäuse und einem Außengehäuse benötigt jedoch eine erhebliche Baugröße, so daß sich die Vorrichtung für enge Einbauverhältnisse, insbesondere im Motorbereich eines Kraftfahrzeug, nur bedingt eignet.

Bei den Vorrichtungen nach der EP-A-0 313 089 der EP-A-0 173 946 und dem Patent Abstracts of Japan, vol. 17, no. 220 (P-1529), 30.04.93 verläßt das gleichfalls im einem Bypasskanal stromaufwärts umgelenkte Medium diesen durch eine Auslaßöffnung, die nicht von einer durch die zugehörige Einlaßmündung aufgespannten Eintrittsebene aufgespannt wird.

Bei einer Brennkraftmaschine treten durch das Öffnen und das Schließen der Einlaßventile der einzelnen Zylinder erhebliche Schwankungen, beziehungsweise Pulsationen der Strömung auf, deren Stärke abhängig von der Ansaugfrequenz der einzelnen Kolben, beziehungsweise von der Drehzahl der Brennkraftmaschine ist. Die Pulsationen der Strömung pflanzen sich von den Einlaßventilen über die Ansaugleitung bis zum Meßelement im Innengehäuse und darüber hinaus fort. Die Pulsationen bewirken, daß abhängig von der Stärke der Pulsationen durch eine thermische Trägheit und Richtungsunempfindlichkeit des Meßelements dieses ein Meßergebnis bereitstellt, das erheblich von der im Mittel im Meßkanal herrschenden Strömungsgeschwindigkeit und der daraus errechenbaren Ansaugluftmasse der Brennkraftmaschine abweicht.

### Vorteile der Erfindung

Die erfindungsgemäße Vorrichtung zur Messung der Masse eines strömenden Mediums mit den kennzeichnenden Merkmalen des Patentanspruchs 1 hat demgegenüber den Vorteil, daß nahezu unabhängig von einer schwankenden oder pulsierenden Strömung ein gleichbleibend präzises Meßergebnis erzielbar ist.

Durch die in den Unteransprüchen aufgeführten Maßnahmen sind vorteilhafte Weiterbildungen und Verbesserungen der im Patentanspruch 1 angegebenen Vorrichtung möglich. Besonders vorteilhaft ist, daß sich die Vorrichtung durch eine kompakte Bauweise und geringe Baugröße auszeichnet und daher nur einen geringen Einbauraum benötigt. Daher eignet sich die Vorrichtung insbesondere als steckbares Bauteil besonders für enge Einbauverhältnisse, beispielsweise im Motorbereich eines Kraftfahrzeugs.

### Zeichnung

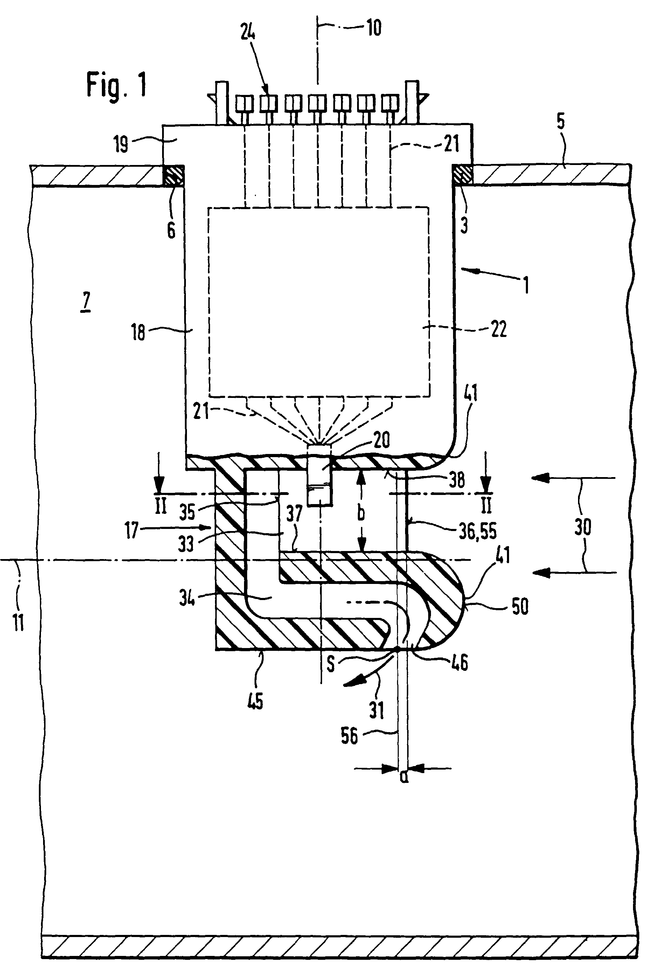

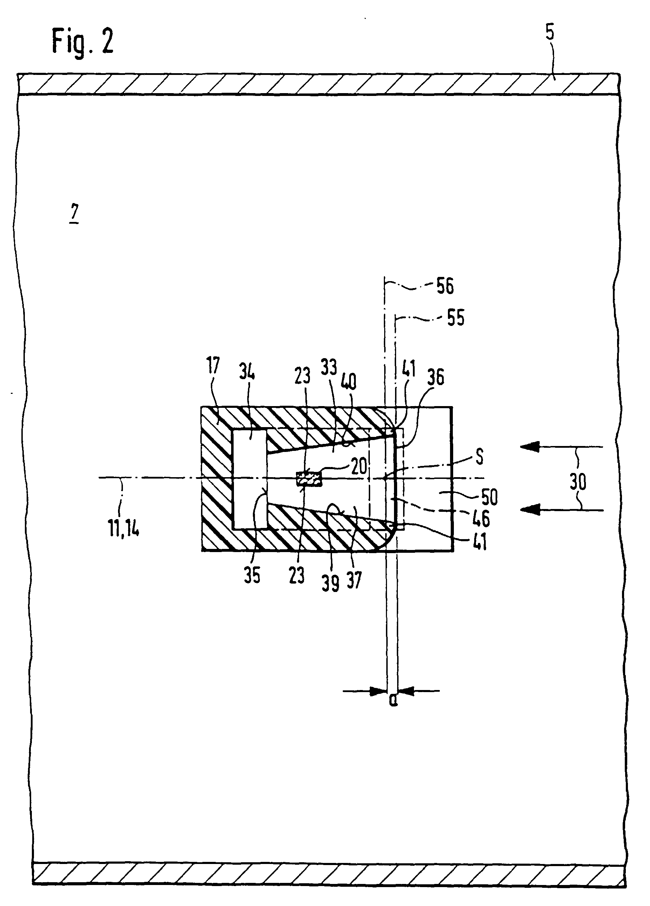

Ein Ausführungsbeispiel der Erfindung ist in der Zeichnung vereinfacht dargestellt und in der nachfolgenden Beschreibung näher erläutert. Es zeigen Figur 1 in teilweiser Schnittdarstellung eine Seitenansicht einer erfindungsgemäß ausgebildeten Vorrichtung, Figur 2 einen Schnitt entlang der Linie II-II in Figur 1.

### Beschreibung des Ausführungsbeispiels

Die Figur 1 zeigt in teilweiser Schnittdarstellung eine Seitenansicht einer mit 1 gekennzeichneten Vorrichtung, die zur Messung der Masse eines strömenden Mediums, insbesondere der Ansaugluftmasse von Brennkraftmaschinen, dient. Die Vorrichtung 1 hat vorzugsweise eine schlanke, sich radial in Richtung einer Längsachse 10 länglich erstreckende, quaderförmige Gestalt und ist in eine aus einer Wandung 5 ausgenommenen Öffnung 6 einer Ansaugleitung 7 zum Beispiel steckbar eingeführt. Die Vorrichtung 1 ist mittels eines Dichtungsringes 3 in der Wandung 5 abgedichtet und beispielsweise mittels einer nicht näher dargestellten Schraubverbindung mit dieser fest verbunden. Die schraffiert dargestellte Wandung 5 ist Teil der beispielsweise zylindrisch ausgebildeten Ansaugleitung 7, durch die hindurch die Brennkraftmaschine über einen nicht näher dargestellten Luftfilter, Luft aus der Umgebung ansaugen kann. Die Wandung 5 der Ansaugleitung 7 begrenzt einen Strömungsquerschnitt, der im Fall einer zylindrischen Ansaugleitung 7 etwa einen kreisrunden Querschnitt aufweist, in dessen Mitte sich in axialer Richtung, parallel zur Wandung 5 eine Mittelachse 11 erstreckt, die senkrecht zur Längsachse 10 orientiert ist. Die Vorrichtung 1 ragt mit einem im folgenden als Meßteil 17 bezeichneten Teil in das strömende Medium, wobei der Meßteil 17 beispielsweise etwa in der Mitte der Ansaugleitung 7 von der Mittelachse 11 symmetrisch aufgeteilt wird, damit ein im Meßteil 17 untergebrachtes, temperaturempfindliches Meßelement 20 möglichst ohne störende Randeinflüsse der Wandung 5 angeströmt werden kann. Im Ausführungsbeispiel in den Figuren 1 und 2 strömt das Medium von rechts nach links, die Strömungsrichtung ist durch entsprechende Pfeile 30 gekennzeichnet.

Die Vorrichtung 1 setzt sich einstückig aus dem Meßteil 17, einem Trägerteil 18 und einem Halteteil 19 zusammen und ist zum Beispiel aus Kunststoff in Kunststoffspritzgußtechnik hergestellt. Das Meßelement 20 ist beispielsweise in Form eines plattenförmigen Keramiksubstrats ausgebildet und besitzt, wie dem Stand der Technik, beispielsweise der DE-A-38 44 354 zu entnehmen ist, einen oder mehrere temperaturabhängige Widerstände, die in Form von Widerstandsschichten, sogenannten Heißfilmwiderständen auf dem plattenförmigen Keramiksubstrat aufgebracht sind. Es ist auch möglich, wie beispielsweise in der DE-A-43 38 891 vorgeschlagen wird, das Meßelement 20 als mikromechanisches Bauteil auszubilden, welches eine dielektrische Membran aufweist. Die einzelnen Widerstandsschichten des Meßelements 20 sind mittels im Innern der Vorrichtung 1 verlaufenden Anschlußleitungen 21 mit einer in der Figur 1 gestrichelt dargestellten, elektronischen Auswerteschaltung 22 elektrisch verbunden, die beispielsweise eine brückenähnlichen Widerstandsmeßschaltung enthält. Die Auswerteschaltung 22 ist zum Beispiel im Trägerteil 18 oder im Halteteil 19 der Vorrichtung 1 untergebracht. Mit einer am Halteteil 19 vorgesehenen Steckverbindung 24 können die von der Auswerteschaltung 22 bereitgestellten elektrischen Signale beispielsweise einem weiteren elektronischen Steuergerät zur Auswertung zugeführt werden, welches unter anderem Funktionen der elektronischen Leerlaufsteuerung oder der Motorleistungssteuerung der Brennkraftmaschine steuert. Auf eine ausführliche Beschreibung der Funktion und des Aufbaus temperaturabhängiger Meßelemente wird verzichtet, da dies der Fachmann dem Stand der Technik entnehmen kann.

Wie in der Figur 2, einer Schnittdarstellung entlang einer Linie II-II in Figur 1, dargestellt ist, besitzt der Meßteil 17 der Vorrichtung 1 eine quaderförmige Gestalt und einen sich in axialer Richtung im Meßteil 17 erstreckenden Meßkanal 33 und einen eine S-Form aufweisenden Umlenkkanal 34. Der Meßkanal 33 erstreckt sich axial im Meßteil 17 von einer, zum Beispiel einen rechteckförmigen Querschnitt aufweisenden Einlaßmündung 36 bis zu einer Mündung 35 und ist von einer der Mittelachse 11 entfernteren Oberfläche 38 und einer der Mittelachse 11 näheren Unterfläche 37 und zwei Seitenflächen 39, 40 begrenzt, wobei im Ausführungsbeispiel der Figur 1 der Meßkanal 33 exzentrisch zur Mittelachse 11 angeordnet ist. Es ist auch möglich, den Meßkanal 33 zentrisch oder im Bereich der Mittelachse 11 der Ansaugleitung 7 anzuordnen. Das plattenförmige Meßelement 20 ist im Meßkanal 33 mit seiner größten Erstreckung radial in Richtung der Längsachse 10 orientiert und wird symmetrisch von dieser aufgeteilt. Das Meßelement 20 ist mit seinem schmalen Ende einseitig im Trägerteil 18 an der Oberfläche 38 gehalten, so daß dieses mit seinen beiden Seitenflächen 23 in etwa parallel zur Mittelachse 11 vom Medium umströmt wird. Wie in der Figur 2 dargestellt ist, verlaufen die Seitenflächen 39, 40 des Meßkanals 33 schräg zu einer von der Mittelachse 11 und der Längsachse 10 aufgespannten Ebene 14 und schließen mit dieser einen spitzen Winkel ein, so daß sich der Meßkanal 33 in Strömungsrichtung 30 axial verjüngt, um mit einem kleinsten Querschnitt an der Mündung 35 in den Umlenkkanal 34 zu münden. Die Verjüngung des Meßkanals 35 bewirkt, daß im Bereich des Meßelements 20 eine möglichst ungestörte, gleichmäßige Parallelströmung herrscht. Um Strömungsablösungen im Bereich der Einlaßmündung 36 zu vermeiden, besitzt diese abgerundete Berandungsflächen 41. Der Umlenkkanal 34 hat einen rechteckförmigen Querschnitt, der in etwa der Querschnittsfläche der Einlaßmündung 36 des Meßkanals 33 entspricht, so daß sich an der Mündung 35 zwischen dem Meßkanal 33 und dem Umlenkkanal 34 der Strömungsquerschnitt abrupt vergrößert. Das axial strömende Medium gelangt vom Meßkanal 33 in den etwa eine S-Form aufweisenden Umlenkkanal 34 und strömt radial in Richtung eines in der Figur 1 eingezeichneten Pfeils 31 aus einer Auslaßöffnung 46 heraus, um sich danach wieder mit dem um die Vorrichtung 1 vorbeiströmenden Medium zu vermischen. Die Auslaßöffnung 46 besitzt wie der Umlenkkanal 34 beispielsweise einen rechteckförmigen Querschnitt und ist an einer parallel zur Mittelachse 11 orientierten, unteren Außenfläche 45 des Meßteils 17 vorgesehen. Rechts von der rechteckförmigen Auslaßöffnung 46 schließt sich in Figur 1 quer zur unteren Außenfläche 45 eine der Strömung 30 entgegenstehende Vorderfläche 50 des Meßteils 17 an, die stromaufwärts der Einlaßmündung 36 in abgerundeter Form von der unteren Außenfläche 45 zur Unterfläche 37 des Meßkanal 33 bis an die Einlaßmündung 36 führt.

Erfindungsgemäß sind die Einlaßmündung 36 des Meßkanals 33 und die Auslaßöffnung 46 des Umlenkkanals 34 radial untereinanderliegend ausgebildet, so daß ein in den Figuren 1 und 2 mit a gekennzeichneter, axialer Abstand nur äußerst gering oder nicht vorhanden ist. Der axiale Abstand a wird bestimmt von einer von der Einlaßmündung 36 aufgespannten Eintrittsebene 55 zu einer parallel zur Eintrittsebene 55 durch einen Flächenschwerpunkt S der Auslaßöffnung 46 hindurchgehenden Flächenschwerpunktsebene 56. Der Flächenschwerpunkt S liegt zum Beispiel bei einer rechteckförmigen Querschnittsfläche der Auslaßöffnung 46 im Schnittpunkt der Seitenhalbierenden. Bekannterweise ist das temperaturempfindliche Meßelement 20 auf einer gegenüber dem strömenden Medium erhöhten Übertemperatur aufgeheizt und gibt hauptsächlich aufgrund von Konvektion Wärme an das strömende Medium ab, wobei die Wärmemenge von der im Meßkanal 33 auftretenden Strömungsgeschwindigkeit abhängig ist, so daß die zur Aufrechterhaltung der Übertemperatur beispielsweise die erforderliche Heizspannung oder der Heizstrom ein Maß für die Strömungsgeschwindigkeit im Meßkanal 33 und der daraus errechenbaren Ansaugluftmasse in der Ansaugleitung 7 ist. Aufgrund der, auf nichtlinearen physikalischen Gesetzmäßigkeiten beruhenden, konvektiven Wärmeabgabe weist das Meßelement 20 eine nichtlineare Kennlinie auf, was dazu führt, daß das Meßergebnis bei pulsierender Strömung und pulsierender Wärmeabgabe an das strömende Medium nicht der tatsächlichen, zeitlich gemittelten Strömungsgeschwindigkeit im Meßkanal 33 entspricht, sondern abhängig von der Stärke der Pulsationen durch eine thermische Trägheit des Meßelements 20 erheblich davon abweicht. Durch die Anordnung der Auslaßöffnung 46 ohne axialem oder mit nur geringem axialen Abstand a, radial unterhalb der Einlaßmündung 36 ist es möglich, daß sich die bei pulsierender Strömung ausgelösten Druckänderungen sowohl an der Einlaßmündung 36 als auch an der Auslaßöffnung 46 in ihrer Wirkung auf den Umlenkkanal 34 gegenseitig aufheben, so daß im Umlenkkanal 34 eine von diesen Druckänderungen unabhängige, gleichmäßige Geschwindigkeit herrscht. Dieser Effekt einer quasi mit konstanter Geschwindigkeit strömenden Luftsäule im Umlenkkanal 34 hat zur Folge, daß auch das Meßelement 20 im Meßkanal 33 unbeeinflußt von den Druckänderungen der Pulsationen und deren Stärke mit konstanter Geschwindigkeit angeströmt wird und sich ein präzises Meßergebnis einstellen kann. Dieser Effekt tritt jedoch nur dann auf, falls die Auslaßöffnung 46 radial unterhalb der Einlaßmündung 36 mit minimalem axialen Abstand a ausgebildet wird. Der Abstand a ist seinerseits von der Wahl der Querschnittsfläche der Einlaßmündung 36, beziehungsweise von der Querschnittsfläche des Meßkanals 33 abhängig und darf höchstens etwa 50 Prozent einer kleinsten Abmessung b der Einlaßmündung 36 betragen. Die kleinste Abmessung b der Einlaßmündung 36 ist im Ausführungsbeispiel in der Figur 1 entsprechend eingezeichnet und entspricht dem radialen Abstand von der Oberfläche 38 des Trägerteils 18 zu der Unterfläche 37 des Meßkanals 33. Handelt es sich beispielsweise um einen zylindrisch ausgebildeten Meßkanal 33 mit einem kreisförmigen Querschnitt, so entspricht die kleinste Abmessung b dem Durchmesser des kreisförmigen Meßkanals 33 an der Einlaßmündung 36.

## Patentansprüche

1. Vorrichtung zur Messung der Masse eines in einer Leitung (7) strömenden Mediums, insbesondere der Ansaugluftmasse von Brennkraftmaschinen, mit einem vom strömenden Medium umströmten, temperaturempfindlichen Meßelement (20), das in einem in der Vorrichtung verlaufenden Meßkanal (33) angeordnet ist, der sich achsparallel zur Leitung (7) von einer eine Eintrittsebene (55) aufspannenden Einlaßmündung (36) des Meßkanals (33) zu einem Umlenkkanal (34) erstreckt, in welchen das im Meßkanal (33) strömende Medium einströmt und aus einer einen Flächenschwerpunkt (S) aufweisenden Auslaßöffnung (46) des Umlenkkanals (34) in die Leitung (7) ausströmt, dadurch gekennzeichnet, daß die von der Einlaßmündung (36) aufgespannte Eintrittsebene (55) die Auslaßöffnung (46) schneidet und zwischen der Eintrittsebene (55) der Einlaßmündung (36) und dem Flächenschwerpunkt (S) der Auslaßöffnung (46) in Achsrichtung der Leitung (7) nur ein geringer axialer Abstand (a) oder gar kein axialer Abstand besteht, wobei der Abstand (a) von der Eintrittsebene (55) der Einlaßmündung (36) zum Flächenschwerpunkt (S) der Auslaßöffnung (46) höchstens etwa 50 Prozent einer kleinsten Abmessung (b) des Querschnitts der Einlaßmündung (36) beträgt.

2. Vorrichtung nach Anspruch 1, dadurch gekennzeichnet, daß die Vorrichtung (1) einen Meßteil (17) mit quaderförmiger Gestalt hat, der den Maßkanal (33) und das Meßelement (20) beinhaltet.

3. Vorrichtung nach Anspruch 1, dadurch gekennzeichnet, daß die Einlaßmündung (36) des Meßkanals (33) einen rechteckförmigen Querschnitt aufweist.

4. Vorrichtung nach Anspruch 3, dadurch gekennzeichnet, daß der Meßkanal (33) einen rechteckförmigen Querschnitt aufweist und sich in Strömungsrichtung auf seiner gesamten Länge verjüngt.

5. Vorrichtung nach Anspruch 1, dadurch gekennzeichnet, daß die Auslaßöffnung (46) des Umlenkkanals (34) einen rechteckförmigen Querschnitt aufweist.

6. Vorrichtung nach Anspruch 1, dadurch gekennzeichnet, daß die Einlaßmündung (36) des Meßkanals (33) abgerundete Berandungsflächen (41) aufweist.

7. Vorrichtung nach Anspruch 1, dadurch gekennzeichnet, daß das Meßelement (20) in Form eines mikromechanischen Bauteils mit einer dielektrischen Membran ausgebildet ist.

8. Vorrichtung nach Anspruch 1, dadurch gekennzeichnet, daß die Vorrichtung (1) als steckbares Bauteil ausgebildet ist.

## Claims

1. Device for measuring the mass of a medium flowing in a conduit (7), in particular the intake air mass of internal combustion engines, with a temperature-sensitive measuring element (20), round which the flowing medium flows and which is arranged in a measuring duct (33) running in the device and extending axially parallel to the conduit (7) from an inlet mouth (36), spanning an entry plane (55), of the measuring duct (33) to a deflecting duct (34), into which the medium flowing in the measuring duct (33) flows and flows out of an outlet orifice (46), having a centroid (S), of the deflecting duct (34) into the conduit (7), characterized in that the entry plane (55), spanned by the inlet mouth (36), intersects the outlet orifice (46) and there is only a short axial distance (a) or no axial distance at all between the entry plane (55) of the inlet mouth (36) and the centroid (S) of the outlet orifice (46) in the axial direction of the conduit (7), the distance (a) from the entry plane (55) of the inlet mouth (36) to the centroid (S) of the outlet orifice (46) being at most approximately 50 per cent of a minimum dimension (b) of the cross section of the inlet mouth (36).

2. Device according to Claim 1, characterized in that the device (1) has a measuring part (17) of cuboid shape which contains the measuring duct (33) and the measuring element (20).

3. Device according to Claim 1, characterized in that the inlet mouth (36) of the measuring duct (33) has a rectangular cross section.

4. Device according to Claim 3, characterized in that the measuring duct (33) has a rectangular cross section and narrows over its entire length in the direction of flow.

5. Device according to Claim 1, characterized in that the outlet orifice (46) of the deflecting duct (34) has a rectangular cross section.

6. Device according to Claim 1, characterized in that the inlet mouth (36) of the measuring duct (33) has rounded edge faces (41).

7. Device according to Claim 1, characterized in that the measuring element (20) is designed in the form of a micromechanical component having a dielectric membrane.

8. Device according to Claim 1, characterized in that the device (1) is designed as a pluggable component.

## Revendications

1. Dispositif servant à mesurer la masse d'un fluide en écoulement dans une conduite (7), en particulier la masse de l'air d'admission de moteurs à combustion interne, comprenant un élément de mesure (20) sensible à la température, entouré par le fluide en écoulement, et disposé dans un canal de mesure (33) parcourant le dispositif, canal de mesure qui s'étend en parallèle à l'axe de la conduite (7) depuis une embouchure d'entrée (36) du canal de mesure (33) passant par un plan d'entrée (55), jusqu'à un canal de dérivation (34), dans lequel s'engage le fluide qui coule dans le canal de mesure (33) et hors duquel il sort dans la conduite (7),par un orifice de sortie (46) dont la surface présente un centre de gravité (S),
caractérisé en ce que
le plan d'entrée (55), qui passe par l'embouchure d'entrée (36) intersecte l'orifice de sortie (46) et il n'y a entre le plan d'entrée (55) de l'embouchure d'entrée (36) et le centre de gravité (S) de la surface de l'orifice de sortie (46) dans le sens axial de la conduite (7) qu'une faible distance axiale (a) ou pas de distance axiale du tout, alors que la distance (a), allant du plan d'entrée (55) de l'embouchure d'entrée (36) au centre de gravité (S) de la surface de l'orifice de sortie (46) atteint au maximum environ 50 % de la plus petite dimension (b) de la section transversale de l'embouchure d'entrée (36).

2. Dispositif selon la revendication 1,
caractérisé en ce que
le dispositif (1) a une partie de mesure (17) de forme carrée, qui contient le canal de mesure (33) et l'élément de mesure (20).

3. Dispositif selon la revendication 1,
caractérisé en ce que
l'embouchure d'entrée (36) du canal de mesure (33) présente une section transversale de forme rectangulaire.

4. Dispositif selon la revendication 3,
caractérisé en ce que
le canal de mesure (33) présente une section transversale de forme rectangulaire, et va en se rétrécissant sur toute sa longueur dans le sens de l'écoulement.

5. Dispositif selon la revendication 1,
caractérisé en ce que
l'orifice de sortie (46) du canal de dérivation (34) présente une section transversale de forme rectangulaire.

6. Dispositif selon la revendication 1,
caractérisé en ce que
l'embouchure d'entrée (36) du canal de mesure (33) présente des surfaces de bordure (41) arrondies.

7. Dispositif selon la revendication 1,
caractérisé en ce que
l'élément de mesure (20) est constitué sous la forme d'un composant micromécanique avec une membrane diélectrique.

8. Dispositif selon la revendication 1,
caractérisé en ce que
le dispositif (1) est constitué sous la forme d'un composant enfichable.
